# EUROPEAN PATENT APPLICATION

(11) **EP 1 761 100 A2**
(43) Date of publication of application: **07.03.2007**
(21) Application number: 06254577.7
(22) Date of filing: 01.09.2006
(51) Int. Cl.: H04Q 7/38

(54) **Wireless communication terminal and method for emergency call connection using hand-off**

(30) Priority: 01.09.2005 KR 20050081376
(71) Applicant: Pantech&Curitel Communications, Inc., Yeongdeungpo-gu, Seoul (KR)
(72) Inventor: Kim, Tae Hoo, Dongjak-gu Seoul 156-776 (KR)
(74) Representative: Mounteney, Simon James

(57) **Abstract**

The present invention relates to a wireless communication terminal for emergency call connection using hand-off. The communication terminal according to the present invention comprises: a wireless transceiver unit configured to transmit and receive a message with an external apparatus; a storage unit configured to store a protocol roaming list; an input unit configured to receive a request signal related to transmission of an emergency call; and a control unit configured to transmit a channel allotment request message to a first base station in response to a signal related to transmission of the emergency call received from the input unit, receive a reorder order message, and transmit another channel allotment request message to a second base station that is searched from the protocol roaming list so as to get an allotment of a traffic channel for the emergency call.

## Description

The present invention generally relates to a wireless communication terminal for emergency call connection using hand-off and a method thereof, and more specifically, to a technology of attempting connection to other networks having a channel allotment possibility to receive a channel when there is no available traffic channel due to a load generated in a currently connection-tried network in time of transmitting the emergency call, thereby improving transmission success rate of the emergency call.

In general, a wireless communication terminal includes a mobile communication terminal, a personal portable communication terminal (PCS), a smart phone, a next generation mobile communication terminal (IMT-2000), a wireless LAN terminal that is portable and enables the wireless communication.

A wireless communication network refers to a system of network side including a base station, a base station controller and a wireless exchanger.

An emergency call refers to a call for urgently allotting a traffic channel, and includes, for example, a fire alarm call or an emergency first-aid call.

A general usage environment of the wireless communication terminal is configured to include a cellular system which is composed of a plurality of cells made by dividing the whole service area into multiple station areas to increase the usage efficiency of frequency bandwidths and enables a continuous communication by intensively controlling the multiple stations with the station controllers and exchangers even when the wireless terminal travels across the different cells.

In this cellular system, the wireless communication terminal provides a hand-off function so that a user can communicate without interruption when the wireless communication terminal moves from one base station area to another base station area. Here, the base station controllers convert wire/wireless signals so that base stations and exchangers can communicate smoothly, and the exchangers allot and manage the channels of a plurality of base stations and connect different communication networks by interacting with other exchangers.

As mentioned above, the hand-off converts traffic channels automatically so that a user can communicate continuously while moving between cells, and includes an intra-cell handoff for changing only traffic channels in the same cell, an inter-cell handoff and an intra-network handoff.

When a call is transmitted with the wireless communication terminal, a load is generated in the network (or, cellular network) to which a connection trial is currently performed so that the call connection may not be promptly achieved.

That is, the call connection may be delayed because there are no available channels which can be allotted as a traffic channel in the cellular network. Particularly, in case of emergency calls that need to be connected promptly, a small amount of delay of the call connection may cause serious problems.

However, in the conventional wireless communication terminal, call connection is attempted by requiring a channel allotment repeatedly to the corresponding network which is currently loaded when a traffic channel for emergency calls is not promptly allotted, thereby degrading the call transmission success rate of emergency calls and causing unnecessary battery consumption.

That is, in the conventional wireless communication terminal, when a reorder order message (or, a message which indicates that the network is busy) is received from the network (or, base station of the network), a call transmission is tried by repeatedly requiring a channel allotment to the same network predetermined times, thereby degrading the call transmission success rate of emergency calls and causing unnecessary battery consumption.

Various embodiments of the present invention are directed at providing a wireless communication terminal for emergency call connection using hand-off for moving into the other network (cellular network) having a large channel allotment possibility when there are no available traffic channel (or, available channels) due to a load in a currently connection-tried network (cellular network) to receive a channel for emergency calls, thereby improving call transmission success rate of emergency calls, and a method thereof.

In other words, the purpose of the present invention is to provide a wireless terminal with the function of emergency call connection using hand-off and a method thereof in which call connection is not repeatedly attempted to the same network but to the other available network (having no load) where a channel can be allotted when there is no available network in the currently connection-tried network in time of transmitting emergency calls (i.e., fire alarm call), so that the connection of emergency calls can be achieved faster than the prior art.

To achieve the purpose of the present invention, there is provided a wireless communication terminal for emergency call connection using hand-off, the wireless communication terminal comprising: a wireless transceiver unit configured to transmit and receive a message with an external apparatus; a storage unit configured to store a protocol roaming list; an input unit configured to receive a request signal related to transmission of an emergency call; and a control unit configured to transmit a channel allotment request message to a first base station in response to a signal related to transmission of the emergency call received from the input unit, receive a reorder order message, and transmit another channel allotment request message to a second base station that is searched from the protocol roaming list so as to get an allotment of a traffic channel for the emergency call.

According to the present invention, there is also provided a method for emergency call connection using hand-off in a wireless communication terminal, the method comprising:

A method for emergency call connection using hand-off in a wireless communication terminal, the method comprising: receiving a request signal related to transmission of an emergency call; transmitting a channel allotment request message to a first base station in response to the request signal related to transmission of the emergency call; receiving a reorder order message from the first base station; searching a pre-stored protocol roaming list to determine a second base station for connection of the emergency call; and transmitting another channel allotment request message to the searched second base station to receive a traffic channel for the emergency call.

Other aspects and advantages of the present invention will become apparent upon reading the following detailed description and upon reference to the drawings in which:
Fig. 1 is a block diagram illustrating a wireless communication terminal for emergency call connection using hand-off according to the present invention;
Fig. 2 is a flow chart illustrating a method for emergency call connection using hand-off in a wireless communication network according to the present invention; and
Fig. 3 is a flow chart illustrating a method for emergency call connection using hand-off in a wireless communication terminal according to the present invention.

The present invention will be described in detail with reference to the accompanying drawings. If possible, the same reference numbers will be used throughout the drawings to refer to the same or like parts.

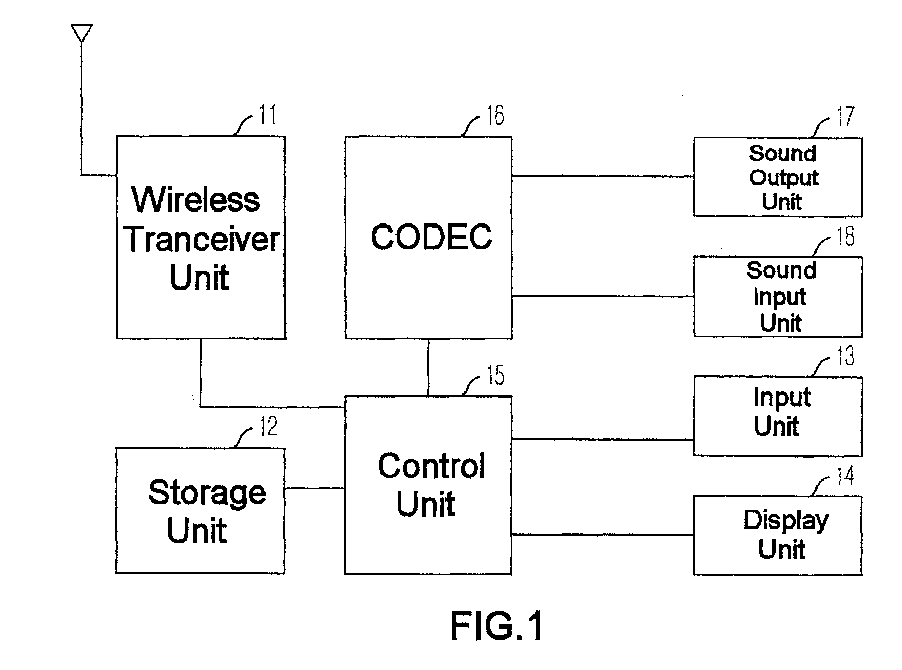

Fig. 1 is a block diagram illustrating a wireless communication terminal for emergency call connection using hand-off according to the present invention.

Referring to Fig. 1, the wireless communication terminal includes a wireless transceiver unit 11 configured to transmit and receive wireless signals with an external apparatus, a storage unit 12 configured to store a protocol roaming list, an input unit (key pad) 13 configured to receive a request signal related to the transmission of an emergency call, and a display unit (LCD) 14 configured to output a screen based on the control of a control unit 15. The wireless communication terminal also includes the control unit 15 configured to transmit a origination message (that is, a message for requesting channel allotment) into a corresponding base station in response to the request signal related to the transmission of the emergency call received from the input unit 13 so as to receive a reorder order message (that is, a message for notifying that a network is busy) and transmit another origination message into another base station having a large channel allotment possibility to allow a traffic channel which may be searched from the protocol roaming list, a CODEC 16 configured to convert signals from the wireless transceiver unit 11 to voices so as to output the voices to a sound output unit (speaker) 17 according to the control of the control unit 15 and also convert voices from a sound input unit (microphone) 18 to signals so as to output the signals to the control unit 15 which enables the transmission of those signals via the wireless transceiver unit 11, a sound output unit 17 configured to output voices from the CODEC 16, and a sound input unit (microphone) 18 configured to receive voices and deliver them into the CODEC 16.

Here, the control unit 15 controls the general operation of the wireless communication terminal and also provides a connection function for emergency calls using hand-off.

According to the control unit 15, if a traffic channel for the emergency call could not be allotted from the current station in service (hereinafter, referred to as "first base station"), a movement from the first base station to another station that has more channel allotment possibility (hereinafter, referred to as "second base station") occurs, that is, a hand-off occurs and another channel allotment request is then made for faster call connection. Here, the optimum second base station is found by search of the protocol roaming list stored in the storage unit 12.

More specifically, the control unit 15 transmits an origination message to the currently connected first base station when it receives a request signal related to transmission of the emergency call through the input unit (key pad) 13. For example, call transmission can be made by means of button input in the fire alarm call.

Thereafter, the optimum second base station having a large channel allotment possibility is found by search of the protocol roaming list stored in the storage unit 12 when the reorder order message is received from the first base station. That is, the second base station having the largest channel allotment possibility is found with the information of each item such as channels stored in the protocol roaming list, SID (System Identification Number) and NID (Network Identification Number).

Then, the control unit 15 transmits the origination message to the second base station to re-attempt emergency call connection. When a traffic channel is allotted from the second base station, a general operation related to call connection is performed (After communication, the call connection is released according to the request from one of the two communication terminals).

When a traffic channel is not allotted from the second base station, a next second base station is found by search of the protocol roaming list, and another channel allotment for emergency calls may be requested to the next second base station. That is, the channel allotment may be requested to the second base stations based on the priority order of each base station recorded in the protocol roaming list.

In the storage unit 12, an operation program and a system program of the control unit 15 are stored. The operation program and the system program are stored in a common ROM region, and may be eliminated if necessary. Also, the storage unit 12 includes a RAM for temporarily storing data generated during various operation programs. The storage unit 12 stores the protocol roaming list recorded by each item such as channels of each base station, SID and NID.

The input unit 13, which includes a plurality of number keys (including the letter keys), menu keys and function keys for performing various functions, outputs key data to the control unit15 based on the user's manipulation. The input unit 13 receives a request signal related to the transmission of emergency calls such as a button input signal of a fire alarm call and an emergency center call.

The display unit 14, which is a display device such as a liquid crystal display, displays states of the wireless communication terminal and progress conditions of programs under the control of the control unit 15. That is, the display unit 14 displays the general states and the inputted content of the wireless communication terminal.

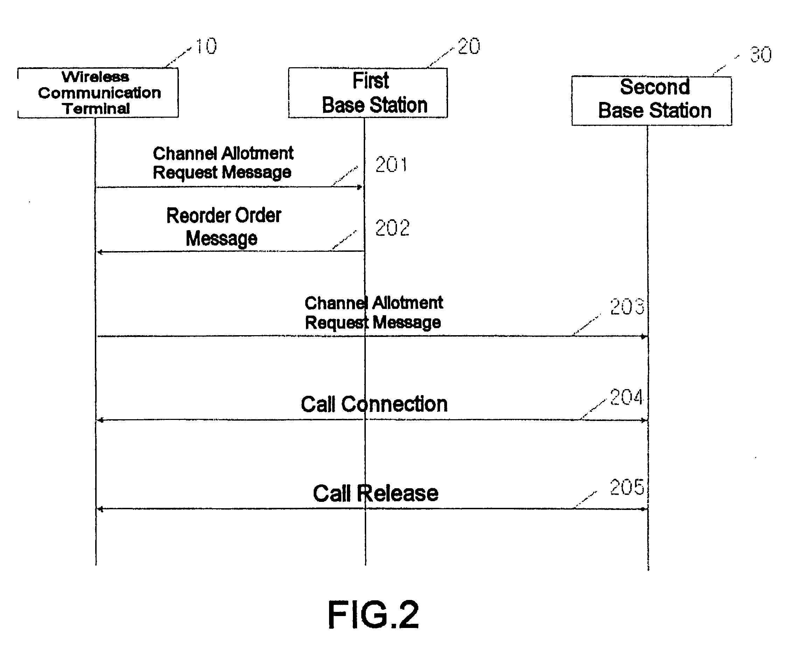

Fig. 2 is a flow chart illustrating a method for emergency call connection using hand-off in a wireless communication network according to the present invention.

Here, Fig. 2 exemplifies a case in which the wireless communication terminal 10 requests channel allotment to the first base station 20 and the second base station 30.

The wireless communication terminal 10 transmits the origination message of the emergency call (i.e., fire alarm call) to the currently connected first base station 20 according to the user's request.

Then the first base station 20 replies the reorder order message into the wireless communication terminal 10 if there is no available channel (202).

The wireless communication terminal 10 re-transmits the origination message to the second base station 30 (203) when it receives the reorder order message from the first base station 20. Then, the wireless communication terminal 10 searches the protocol roaming list stored therein to select the optimum second base station 30 having a large channel allotment possibility.

Thereafter, the second base station 30 allots a traffic channel for emergency calls to the wireless communication terminal 10 to perform a general operation related to call connection (204) and release the call (205).

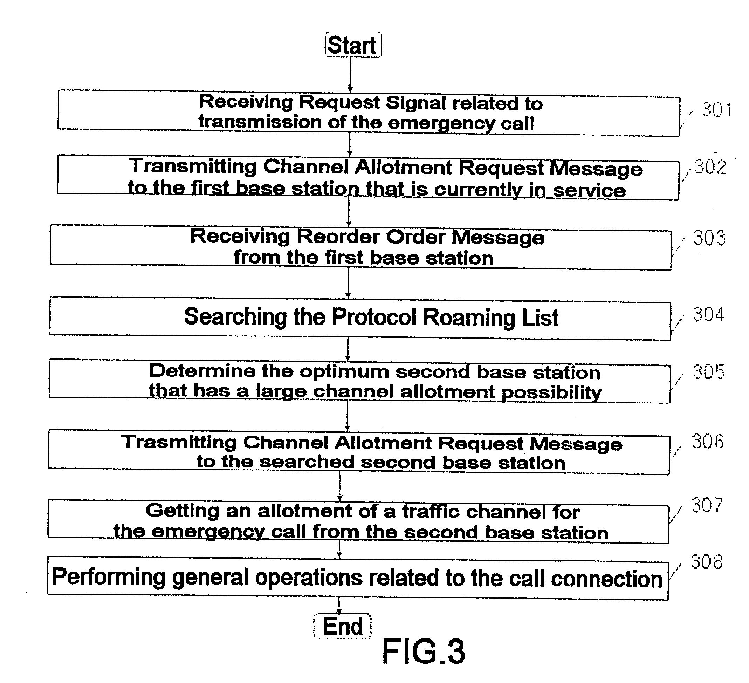

Fig. 3 is a flow chart illustrating a method for emergency call connection using hand-off in a wireless communication terminal according to the present invention.

When the control unit 15 receives a signal related to transmission of emergency calls through the input unit (key pad) 13 (301), the control unit 15 transmits the origination message to the currently connected first base station (302).

Then, when the reorder order message is received from the first base station (303), the protocol roaming list stored in the storage unit 12 is searched (304) to find the optimum second base station having a large channel allotment possibility (305). That is, the protocol roaming list including channels of each base station, SID and NID is searched, and the optimum second base station is selected based on the priority order. For example, if a "Reorder" message is received from the first base station due to the network load after a first call is transmitted to the first base station SID:2004, a base station showing the largest power is searched among the adjacent base stations except the first base station SID:2004 in the protocol roaming list, and a second call is transmitted to a searched base station (second base station).

Then, the control unit 15 transmits the origination message to the second base station (306).

Thereafter, when a traffic channel for emergency calls is allotted from the second base station (307), the general operation related to call connection is performed (308).

In this embodiment, when there is no available channel due to a load in the currently connected network (cellular network), the channel allotment is not requested repeatedly to the same base station. Instead, the current network is handed off to the other network having a large channel allotment possibility based on the search result of the protocol roaming list so that emergency calls can be promptly connected.

The above-described method may be embodied into programs and stored in record mediums (CD, RAM, ROM, floppy disk, hard disk, magneto-optical disk) that can be read by computers. This process is not explained because it can be easily performed by a person having ordinary skill in the art.

As described above, when a traffic channel is not allotted in transmission of emergency calls, a traffic channel is allotted from the other network having no load using hand-off, thereby improving call transmission success rate of emergency calls and also reducing unnecessary battery consumption.

## Claims

1. A wireless communication terminal for emergency call connection using hand-off, the terminal comprising:
a wireless transceiver unit configured to transmit and receive a message with an external apparatus;
a storage unit configured to store a protocol roaming list;
an input unit configured to receive a request signal related to transmission of an emergency call; and
a control unit configured to transmit a channel allotment request message to a first base station in response to a signal related to transmission of the emergency call received from the input unit, receive a reorder order message, and transmit another channel allotment request message to a second base station that is searched from the protocol roaming list so as to get an allotment of a traffic channel for the emergency call.

2. The wireless communication terminal according to claim 1, wherein the control unit may transmit channel allotment request messages to searched base stations from the protocol roaming list repeatedly based on the priority order of the search result.

3. The wireless communication terminal according to claim 1 or 2, wherein the protocol roaming list includes channels of each base station, SID (System Identification Number) and NID (Network Identification Number).

4. A method for emergency call connection using hand-off in a wireless communication terminal, the method comprising:
receiving a request signal related to transmission of an emergency call;
transmitting a channel allotment request message to a first base station in response to the request signal related to transmission of the emergency call;
receiving a reorder order message from the first base station;
searching a pre-stored protocol roaming list to determine a second base station for connection of the emergency call; and
transmitting another channel allotment request message to the searched second base station to receive a traffic channel for the emergency call.

5. The method according to claim 4, wherein the steps of searching the pre-stored protocol roaming list and transmitting another channel allotment request message may be performed repeatedly based on the priority order of the search result.

6. The method according to claim 4 or 5, wherein the protocol roaming list includes channels of each base station, SID and NID.
